# EUROPEAN PATENT APPLICATION

(11) **EP 1 544 270 A1**
(43) Date of publication of application: **22.06.2005**
(21) Application number: 03733257.4
(22) Date of filing: 03.06.2003
(51) Int. Cl.: C09D 201/00, C09D 5/08, C09J 201/00, E04C 5/08, E04G 21/12

(54) **COATING COMPOSITION FOR STRESSING MATERIAL FOR PRESTRESSED CONCRETE**

(30) Priority: 12.09.2002 JP 2002267227
(71) Applicant: Shinko Wire Co., Ltd., Amagasaki-shi, Hyogo 660-0091 (JP); Mitsui Chemicals, Inc., Tokyo 105-7117 (JP)
(72) Inventor: HIRATA, Seiichiro, Amagasaki-shi, Hyogo 660-0091 (JP); SHIRAHAMA, Shoji, c/o Shinko Wire Co. Ltd., Amagasaki-shi, Hyogo 660-0091 (JP); KOBAYASHI, Toshio, c/o Mitsui Chemicals Inc., Sodegaura-shi, Chiba 299-0265 (JP); AOYAMA, Ichirou, Yokohama-shi, Kanagawa 234-0056 (JP)
(74) Representative: Müller-Boré & Partner Patentanwälte
(86) International application number: PCT/JP2003/006981
(87) International publication number: WO 2004/024840

(57) **Abstract**

Disclosed is a coating composition for a tendon for prestressed concrete; wherein being applied on the surface of the tendon for a tendon for prestressed concrete; comprising oxidation-curing type resin modified with fatty acid, and metal catalyst to promote the curing of the resin; and curing time thereof is adjusted so that tensioning by the tendon canbe exerted 30 days or later after casting of the concrete. The coating composition can be used safely almost without cutaneous stimulation, and enable effective tensioning even after hardening of the concrete when applied to massive concrete structure. Further, the coating composition exhibits excellent storage stability.

## Description

### TECHNICAL FIELD

The present invention relates to a coating composition applied on a surface of PC (Prestressed Concrete) steel product or the like used as tendon in post-tensioning system of prestressed concrete for the purpose of preventing rust and corrosion as well as integrating the tendon with the concrete.

### BACKGROUND ART

Concrete used in various constructions has a disadvantage of vulnerability to tension force. In order to compensate for this disadvantage, there has been known concrete provided with improved tension strength by preliminarily applied compression force with PC tendon. This concrete is called as prestressed concrete. As a representative method for producing such prestressed concrete, post-tensioning system has been known.

A general production method of prestressed concrete by this post-tensioning system is described below. Before casting of concrete, sheath member is put in the concrete. Then, PC tendon (PC steel wire, PC steel twist wire, PC hard steel wire, PC steel rod, continuous fiber, or the like) is inserted into the sheathmember. After hardening of the concrete, the PC tendon is tensioned by means of a tensioning machine. After that, in order to prevent the PC tendon from rusting and becoming eroded as well as to achieve adhesion and integration of the PC tendon with the concrete, cement milk or the like is injected between the sheath member and the PC tendon.

However, according to this method, the operations of inserting the PC tendon into the sheath member and injecting the cement milk or the like are very complicated. As the result, this method requires great time and labor, leading a drawback of cost rise. In addition, since the space between the inserted PC tendon and the sheath member is very narrow, and the PC tendon is arranged in a curved manner, it is difficult to completely fill the whole of the sheath member with the cement milk or the like, so that the tendon may be corroded in the defectively filled region.

In order to solve the above problems, there have been proposed methods of preliminarily coating the surfaces of tendon with coating material (see, for example, Japanese Examined Patent Publication No. HEI 3-28551 (1991), Japanese Examined Patent PublicationNo. SHO 53-47609 (1978) and the like). These methods can be generally classified into (1) those giving anti-rust and anti-corrosion effects and (2) those inhibiting adhesion between concrete and tendon while giving anti-rust and anti-corrosion effects.

In a typical example of methods (1), epoxy resin as coating material is electrostatic-coated on the surface of PC steel material as tendon. Although anti-rust and anti-corrosion effects can be exerted by this method, the coating material is brought into a completely cured state on the surface of the tendon. Therefore, when this method is used in a post-tensioning system, insertion of the tendon into sheath member and grouting operation for integrating the concrete and the tendon are still required as is the case of usual post-tensioning system, so that the problem of cost rise remains unsolved.

On the other hand, one exemplary method of the above classification (2) uses so-called unbonding PC steel material. The unbonding PC steel material is obtained by applying grease as coating material on the surface of PC steel material as tendon and covering the resultant PC steel material with sheath member such as polyethylene or the like. In this method, before casting of concrete, the above-mentioned unbonding PC steel material is arranged. After hardening of the concrete, the PC steel material is tensioned. When the PC steel material is tensioned, the tension strength is transmitted along the whole length of the PC steel material because the fluid grease exists between the concrete and the PC steel material. Accordingly, metal sheath member used in usual post-tensioning system is no longer necessary, with the result that insertion of tendon into the sheath member as well as grouting operation for injecting cement milk or the like are no longer required. Therefore, the problem of cost rise which is one disadvantage of usual post-tensioning systems can be solved.

However, the abovemethodhas disadvantages of poor bending strength and poor fatigue strength of concrete since the grease as coating material will never be cured, and the tendon will never bond to the concrete.

As a technique for solving the above disadvantage accompanying the method using the above-mentioned unbonding steel material, also proposed is a method that thermo-curing composition in uncured state as coating material is applied on the surface of the PC steel material. Then, the resultant PC steel is arranged in concrete in the same manner as the case of the above-mentioned unbonding PC steel material. After tensioning the PC steel material, the steel material is heated by means of high-frequency heating or the like to allow the thermo-curing composition applied on the steel material to be cured. As the result, the PC steelmaterial adheres the concrete. However, in this technique, since the tendon which is being tensioned is heated, the strength of the tendon may be decreased due to the heating. Such a situation is very risky. In addition, it is difficult to accurately heat only certain material region in massive concrete structure, which leads the disadvantage that complete adhesion along the whole length of the steel with concrete is impossible.

From the view point of solving these problems, in Japanese Examined Patent Publication No. HEI 8-11791 (1996) , is proposed a technique that applies coating material with controlled curing time (curable coating composition) on the surfaces of the PC tendon.

This technique exhibits the rust prevention and corrosion prevention effect of PC tendon and ensures the adhesive force between concrete and the PC tendon without causing problems as described above. The curable composition used in this technique is based on epoxy resin, blended with potential curing agent such as dihydrazides, diphenyldiaminosulfone, dicyan diamide, imidazole and derivatives thereof, and curing accelerator such as tertiary amine compound if necessary.

Development of such a technique has made it possible to exhibit advantageous effects of PC tendon effectively, but there remain some problems to be solved notwithstanding this technique. Both of the liquid epoxy resin which is used as the main component in the above-mentioned curable composition and the optionally-added amine compound are irritant to the skin. Thus, there is a problem that workers get a rash at the time of the coating work thereof or work for embedding PC tendon. In the case of a large concrete construction, the exothermic temperature after concrete is casted is over 90°C and further the high temperature is kept for a long time. As the result, the curable coating composition starts to be cured, so that PC tendon may be unable to be stressed after the concrete is hardened.

As a technique that can be used under high exothermic temperature during hardening of concrete, also proposed is a technique that is available at high temperatures by controlling the curing time by applying curable coating composition containing epoxy resin and moisture curing agent on the surface of PC tendon (see for example, Japanese Unexamined Patent Publication No.2000-281967). In this technique, ketimine is used as the moisture curing agent.

The above-mentioned ketimine reacts with moisture to generate curing agent. Industrially produced ketimine is primary amine blocked by ketones at a blocking percentage of about 80 to 90%; hence, it includes about 10 to 20% of remaining active amines. In other words, the curable composition used in this technique contains a liquid epoxy resin and ketimine, and this ketimine also is a material which irritates the skin intensely. Therefore, the problem that workers get a rash is not overcome. Further, in such a curable coatingmaterial, since the remaining active amines gradually increase the viscosity, storage stability is not satisfactory. In curable coating composition having insufficient storage stability, the viscosity increases due to reactions occurring before it is applied on PC tendon after production thereof, which may impair usability in coating operation and reduce the life of the product.

The present invention has been made under such a situation. An object thereof is to provide a coating composition for PC tendon which is hardly irritant to the skin so as to be able to be safely used; which enables effective stressing even after concrete is hardened in the case that the composition is applied to a large concrete construction; and which is further superior in storage stability.

### DISCLOSURE OF THE INVENTION

The coating composition for PC tendon of the present invention, which can attain the above-mentioned object, has the following subject matter: a coating composition is applied on the surface of a prestressed concrete tendon; comprises oxidation-curing type resin modified with fatty acid, and metal catalyst to promote the curing of the resin; and curing time thereof is adjusted so that tensioning by the tendon can be exerted 30 days or later after casting of the concrete.

The coating composition can further comprise filler. The iodine value of the fatty acid used for the modification is preferably 50 or more. The "oxidation-curing type resin" in the invention means a resin which undergoes oxidation polymerization by action of oxygen in air to form a network structure.

In the coating composition for PC tendon of the invention, preferred examples of the metal catalyst, which is contained in the composition in order to promote the curing of the oxidation-curing type resin, include a salt of naphthenic acid and/or salt of octanoic acid. The metal catalyst is preferably comprised in order that the mass ratio of the metal included in the metal catalyst to the oxidation-curing type resin is 0.05 to 0.5%.

### BEST MODE FOR CARRYING OUT THE INVENTION

The inventors have made investigations from various angles in order to realize a coating composition, for a PC tendon, which can attain the above-mentioned object. As a result, the inventors have found out that the above-mentioned object can be satisfactorily attained by using, as a coating composition for PC tendon, a composition obtained by preparing oxidation-curing type resin which is not irritant to the skin, as a material which constitutes the above-mentioned composition, and incorporating thereinto metal catalyst so as to adjust the curing time of the composition in such a manner that the tendon can be stressed after 30 days or more from the time when concrete is casted. In this way, the invention has been completed.

The oxidation-curing type resin, which is a component constituting the coating composition in the invention, is not limited to any especial kind if the resin contains, in a single molecule thereof, one or more fatty acids which can be oxidation-polymerized. Examples thereof include the following (a) to (c):
(a) oil modified alkyd resin,
(b) fatty acid modified epoxy resin, and
(c) oil modified urethane resin.

Neutral oil, polyhydric alcohol, polybasic acid or isocyanates used when the above-mentioned (a) to (c) are produced is not limited to any especial kind. The examples of the used fatty acid include linseed oil fatty acid, chinese wood oil fatty acid, safflower oil fatty acid, soybean oil fatty acid, rice-bran oil fatty acid, cotton oil fatty acid, ricinus fatty acid, dehydrated caster oil fatty acid and coconut oil fatty acid. Considering the curability of resins, the iodine value of the fatty acid is preferably 50 or more. If the iodine value of the fatty acid is less than 50, it is feared that the number of unsaturated bonds in the oxidation-curing type resin becomes small to result in an inconvenience that the curability becomes slow.

In the coating composition of the invention, metal catalyst is incorporated into the oxidation-curing type resin at an appropriate ratio, whereby the curability (curing time) of the oxidation-curing type resin can be adjusted. Examples of the metal catalyst which can be used at this time include salts of naphthenic acid such as cobalt naphthenate, calciumnaphthenate, lithium naphthenate, manganese naphthenate, lead naphthenate, zinc naphthenate, copper naphthenate and zirconium naphthenate; and salts of octanoic acid such as cobalt octanoate, calcium octanoate, manganese octanoate, copper octanoate, lead octanoate, zinc octanoate, zirconium octanoate, aluminum octanoate and stannous octanoate. These may be used alone or in combination of two or more thereof.

The metal catalyst is preferably comprised in order that the mass ratio of the metal included in the metal catalyst to the oxidation-curing type resin is 0.05 to 0.5%. The curability of the oxidation-curing type resin is slow if the value concerning the content of the metal catalyst is less than 0.05% by mass, and the curability is speedy if the value is more than 0.5% by mass.

If necessary, various fillers can be incorporated into the coating composition of the invention in order to adjust the viscosity or the thixotropy thereof. Examples of the fillers include talc, calcium carbonate, calcium oxide, silica, aerosil (superfine particles of anhydrous silicon dioxide), sepiolite and colored pigments. Any filler that is generally used for paints or adhesive agents can be used. Organic solvent, dispersing agent, antifoamer or the like can be used together to adjust the viscosity.

The process for producing a coating composition of the invention is not particularly limited. An example thereof is as follows. First, a given amount of metal catalyst is incorporated into oxidation-curing type resin. Next, filler is added thereto if necessary, and then the components are stirred andmixed with a mixer. After the end of the mixing, the resultant is defoamed in vacuum so as to prepare the coating material.

In the case of using the coating composition of the invention in posttensioning, the composition is applied on the surface of PC tendon and then the resultant is covered with sheath member which is made of resin such as polyethylene and has irregularities in the inner and outer surfaces thereof. The period from time when concrete is casted to the time when the strength of the concrete reaches a given strength is about two weeks. Furthermore, about two weeks may be further necessary until stressing in accordance with the schedule of construction work. It is therefore necessary to adjust the curing time of the coating composition in such a manner that stressing is possible for at least 30 days after the concrete is casted. It is also preferred to adjust the curing time in such a manner that the composition is cured in 1 to 2 years after the PC tendon is stressed. Specifically, the curing time can be adjusted by changing the kind (iodine value) of the fatty acid used for modification besides adjusting the content of the metal catalyst in the oxidation-curing type resin.

In order to exhibit advantageous effects of the coating composition of the invention effectively, it is preferred that the coating thickness of the coating composition is 20 µm or more. If the coating thickness is less than 20 µm, dissociation between PC steel member and concrete or sheath member becomes insufficient and the frictional coefficient becomes large when PC steel member is stressed. The method for the application is not particularly limited if the composition can be applied uniformly on the surface of PC tendon. An example thereof is a method of causing each steel member to pass through a resin box filled with resin and removing an excess of the resin with a hole having the same diameter as the stressing member which has undergone the application so as to apply the resin uniformly in an intentional amount.

### EXAMPLES

The present invention is described in more detail by way of the following examples. The examples do not limit the invention. Any modification or change in accordance with the subj ect matter which has been described above or will be described below is included in the technical scope of the invention.

### Preparation Example 1 of Oxidation-Curing Resin

Into a 2000-mL four-neck flask equipped with a cooling tube, a nitrogen-introducing tube, a thermometer and a stirring device, were charged 409.7 g of epoxy resin R140 (manufactured by Mitsui Chemicals), 589.8 g of linseed oil fatty acid and 0.5 g of dimethylethanolamine, so as to conduct reaction at 100°C under the atmosphere of nitrogen for 45 hours. The acid value of the resultant resin was measured. As a result, the acid value was 0.3 mg KOH/g. Thus, it was proved that the modification reaction with the fatty acid was finished.

### Preparation Example 2 of Oxidation-Curing Resin

Into a 2000-mL four-neck flask equipped with a cooling tube, a nitrogen-introducing tube, a thermometer and a stirring device, were charged 395.6 g of the epoxy resin R140 (manufactured by Mitsui Chemicals), 603.9 g of soybean oil fatty acid and 0. 5 g of dimethylethanolamine, so as to conduct reaction at 100°C under the atmosphere of nitrogen for 45 hours. The acid value of the resultant resin was measured. As a result, the acid value was 0.3 mg KOH/g. Thus, it was proved that the modification reaction with the fatty acid was finished.

### Preparation Example 3 of Oxidation-Curing Resin

Into a 2000-mL four-neck flask equipped with a cooling tube, a nitrogen-introducing tube, a thermometer and a stirring device, were charged 482.5 g of the epoxy resin R140 (manufactured by Mitsui Chemicals), 517.0 g of coconut oil fatty acid and 0.5 g of dimethylethanolamine, so as to conduct reaction at 100°C under the atmosphere of nitrogen for 45 hours. The acid value of the resultant resin was measured. As a result, the acid value was 0.3 mg KOH/g. Thus, it was proved that the modification reaction with the fatty acid was finished.

### Production Example 1 of Coating Composition

Into a mixer were put 539. 9 g of the oxidation-curing type resin obtained in the above-mentioned Preparation Example 1, 0.45 g of 6% cobalt naphthenate, 0.45 g of 6% manganese naphthenate, 1.8 g of 15% lead naphthenate, 9.0 g of aerosil, 298. 5 g of talc and 149.9 g of calcium carbonate, and then the components were stirred and mixed for 30 minutes. Thereafter, the resultant was defoamed under reduced pressure to yield a coating composition. About the irritation of this composition to the skin, the adverse effect thereof onto the skin of 10 workers was evaluated on the basis of the following criterion when the workers actually worked.

Evaluation of the irritation to the skin
○ : No irritation was given to the skin.
Δ : Redness was generated in the skin.
× : An itch was generated in the skin.

The coating composition obtained above was applied, into a thickness of 0.5 to 1.0 mm, onto PC steel members (steel rods) having a diameter of 12.7 mm. Then, the resultant members were covered with sheath members, which were made of polyethylene and had irregularities in the outer and inner surfaces thereof. The resultants were embedded in concrete. The coating composition was first taken out from the concrete after 30 days. The viscosity of the coating composition was measured (in the case that the composition had such softness that the viscosity of the composition was able to be measured). After 1.5 years, the coating composition was again taken out from the concrete, and then the hardness of this coating composition was measured. The coating composition was put into a glass closed vessel, and then stored in a 23°C thermostat so as to evaluate the storage stability thereof on the basis of a change in the viscosity thereof with the passage of time. In this case, the viscosity after 30 days and that after 1. 5 years were measured with a Brookfield viscometer, and the viscosity for the storage stability was measured with an EH type viscometer.

### Production Example 2 of Coating Composition

Into a mixer were put 538.4 g of the oxidation-curing type resin obtained in the above-mentioned Preparation Example 1, 0. 9 g of 6% cobalt naphthenate, 0.9 g of 6% manganese naphthenate, 3.6 g of 15% lead naphthenate, 9.0 g of aerosil, 297.7 of talc and 149.5 g of calcium carbonate, and then the components were stirred and mixed for 30 minutes. Thereafter, the resultant was defoamed under reduced pressure to yield a coating composition. The irritation of this composition to the skin was evaluated in the same way as in the above-mentioned Production Example 1. The resultant coating composition was also evaluated for the viscosity, hardness and storage stability in the same way in the above-mentioned Production Example 1.

### Production Example 3 of Coating Composition

Into a mixer were put 535. 5 g of the oxidation-curing type resin obtained in the above-mentioned Preparation Example 1, 1. 8 g of 6% cobalt naphthenate, 1. 8 g of 6% manganese naphthenate, 7.2 g of 15% lead naphthenate, 9.0 g of aerosil, 296.1 g of talc and 148.7 g of calcium carbonate, and then the components were stirred and mixed for 30 minutes. Thereafter, the resultant was defoamed under reduced pressure to yield a coating composition. The irritation of this composition to the skin was evaluated in the same way as in the above-mentioned Production Example 1. The resultant coating composition was also evaluated for the viscosity, hardness and storage stability in the same way in the above-mentioned Production Example 1.

### Production Example 4 of Coating Composition

Into a mixer were put 538.4 g of the oxidation-curing type resin obtained in the above-mentioned Preparation Example 2, 0. 9 g of 6% cobalt naphthenate, 0.9 g of 6% manganese naphthenate, 3.6 g of 15% lead naphthenate, 9.0 g of aerosil, 297.7 g of talc and 149.5 g of calcium carbonate, and then the components were stirred and mixed for 30 minutes. Thereafter, the resultant was defoamed under reduced pressure to yield a coating composition. The irritation of this composition to the skin was evaluated in the same way as in the above-mentioned Production Example 1. The resultant coating composition was also evaluated for the viscosity, hardness and storage stability in the same way in the above-mentioned Production Example 1.

### Production Example 5 of Coating Composition

Into a mixer were put 535.5 g of the oxidation-curing type resin obtained in the above-mentioned Preparation Example 2, 1.8 g of 6% cobalt naphthenate, 1. 8 g of 6% manganese naphthenate, 7.2 g of 15% lead naphthenate, 9.0 g of aerosil, 296.1 g of talc and 148.7 g of calcium carbonate, and then the components were stirred and mixed for 30 minutes. Thereafter, the resultant was defoamed under reduced pressure to yield a coating composition. The irritation of this composition to the skin was evaluated in the same way as in the above-mentioned Production Example 1. The resultant coating composition was also evaluated for the viscosity, hardness and storage stability in the same way in the above-mentioned Production Example 1.

### Production Example 6 of Coating Composition

Into a mixer were put 541. 0 g of the oxidation-curing type resin obtained in the above-mentioned Preparation Example 1, 0.09 g of 6% cobalt naphthenate, 0.09 g of 6% manganese naphthenate, 0.36 g of 15% lead naphthenate, 9.0 g of aerosil, 299.2 g of talc and 150.23 g of calcium carbonate, and then the components were stirred andmixed for 30 minutes. Thereafter, the resultant was defoamed under reduced pressure to yield a coating composition. The irritation of this composition to the skin was evaluated in the same way as in the above-mentioned Production Example 1. The resultant coating composition was also evaluated for the viscosity, hardness and storage stability in the same way in the above-mentioned Production Example 1.

### Production Example 7 of Coating Composition

Into a mixer were put 513.4 g of the oxidation-curing type resin obtained in the above-mentioned Preparation Example 1, 8.6 g of 6% cobalt naphthenate, 8.6 g of 6% manganese naphthenate, 34.3 g of 15% lead naphthenate, 8.6 g of aerosil, 283.9 g of talc and 142.6 g of calcium carbonate, and then the components were stirred andmixed for 30 minutes. Thereafter, the resultant was defoamed under reduced pressure to yield a coating composition. The irritation of this composition to the skin was evaluated in the same way as in the above-mentioned Production Example1. The resultant coating composition was also evaluated for the viscosity, hardness and storage stability in the same way in the above-mentioned Production Example 1.

### Production Example 8 of Coating Composition

Into a mixer were put 538.4 g of the oxidation-curing type resin obtained in the above-mentioned Preparation Example 3, 0.9 g of 6% cobalt naphthenate, 0.9 g of 6% manganese naphthenate, 3.6 g of 15% lead naphthenate, 9.0 g of aerosil, 297.7 g of talc and 149.5 g of calcium carbonate, and then the components were stirred and mixed for 30 minutes. Thereafter, the resultant was defoamed under reduced pressure to yield a coating composition. The irritation of this composition to the skin was evaluated in the same way as in the above-mentioned Production Example 1. The resultant coating composition was also evaluated for the viscosity, hardness and storage stability in the same way in the above-mentioned Production Example 1.

### Production Example 9 of Coating Composition

Into a mixer were put 598.8 g of the epoxy resin ("R140", manufactured by Mitsui Chemicals), 59.9 g of a ketimine ("Epicure H3", manufactured by Japan Epoxy Resins Co., Ltd.), 299.4 g of calcium oxide and 41. 9 g of benzyl alcohol, and then the components were stirred andmixed for 30 minutes. Thereafter, the resultant was defoamed under reduced pressure to yield a coating composition. The irritation of this composition to the skin was evaluated in the same way as in the above-mentioned Production Example1. The resultant coating composition was also evaluated for the viscosity, hardness and storage stability in the same way in the above-mentioned Production Example 1.

The component ratios in each of the above-mentioned coating compositions are collectively shown in Table 1 described blow. The viscosity, hardness and storage stability of each of the coating compositions are collectively shown in Table 2 described below. The irritation to the skin when each of the coating compositions was used is shown in Table 3 described below.

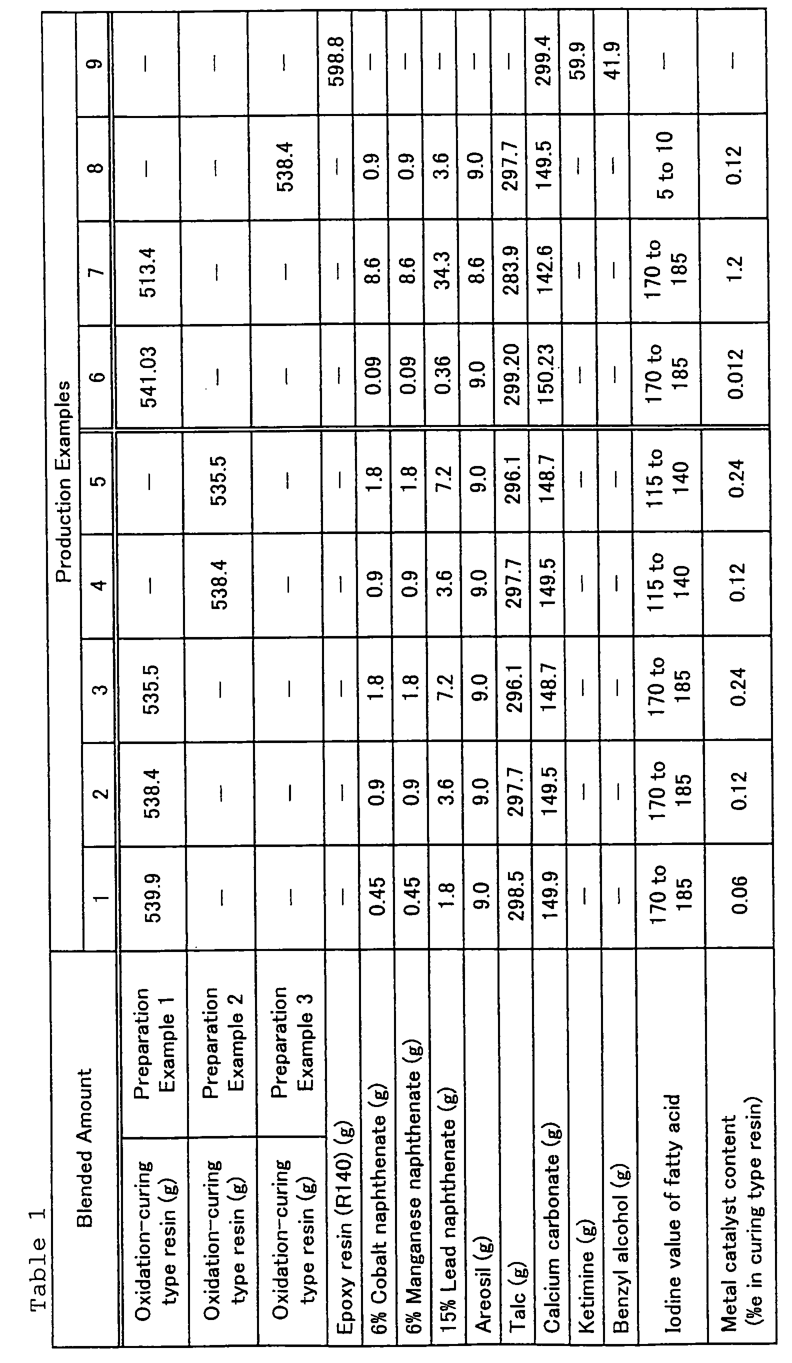

**Table 2**

| Production Example | Viscosity after 30 days (Pa·s/25° C) | Hardness (D) after 1.5 years | Storage stability | |
|---|---|---|---|---|
| | | | Viscosity immediately after production (Pa·s/25°C) | Viscosity after one month (Pa·s/25°C) |
| 1 | 600 | 42 | 65 | 1. 03 |
| 2 | 630 | 45 | 63 | 1. 03 |
| 3 | 670 | 46 | 67 | 1. 02 |
| 4 | 610 | 44 | 61 | 1.02 |
| 5 | 650 | 45 | 65 | 1. 03 |
| 6 | 520 | 0 | 62 | 1.02 |
| 7 | 2500 | 50 | 63 | 2.20 |
| 8 | 500 | 0 | 62 | 1.03 |
| 9 | 2600 | 48 | 62 | 2.15 |

**Table 3**

| Production Example | Evaluation of irritation to the skin (the number of workers) | | |
|---|---|---|---|
| | ○ | Δ | × |
| 1 | 10 workers | 0 worker | 0 worker |
| 2 | 10 workers | 0 worker | 0 worker |
| 3 | 10 workers | 0 worker | 0 worker |
| 4 | 10 workers | 0 worker | 0 worker |
| 5 | 10 workers | 0 worker | 0 worker |
| 6 | 7 workers | 3 workers | 0 worker |
| 7 | 8 workers | 2 workers | 0 worker |
| 8 | 10 workers | 0 worker | 0 worker |
| 9 | 4 workers | 4 workers | 2 workers |

From these results, consideration can be taken as follows. It is understood that: the coating compositions produced in Production Examples 1 to 5 satisfying all of the requirements defined in the invention are hardly irritant to the skin; by using the compositions, stressing is possible after 30 days or more from the time when concrete is casted; further, the composition is cured after 1.5 years therefrom; and additionally coating materials having a low viscosity amplification after the one month to give a good storage stability are obtained.

On the other hand, it is understood that the coating compositions produced in Production Examples 6 to 8, which do not satisfy one or more of the requirements defined in the invention, give low irritation to the skin but one or more of the properties deteriorate. It is understood that about the coating composition produced in Production Example 9, which is a conventional composition, some of the properties thereof deteriorate and further the irritation to the skin is high.

In other words, the composition of Production Example 6 is excellent in storage stability and stressing is possible by using the composition after the 30 days but the composition is insufficiently cured after the 1.5 years since the content of the metal catalyst is small. Stressing after the 30 days is possible by using the composition of Production Example 7, but the coating composition has a high viscosity amplification after the 30 days to give a poor storage stability since the content of the metal catalyst is large. The composition of Production Example 8 is excellent in storage stability and stressing after the 30 days is possible by using the composition, but the composition is not yet cured sufficiently after the 1.5 years since the iodine value of the fatty acid is less than 50. Stressing after the 30 days is possible by using the composition of Production Example 9, but the coating composition has a high viscosity amplification after the 30 days to give a poor storage stability since the composition reacts gradually by action of the active amine so that viscosity thereof increases. Moreover, the irritation thereof to the skin is high since the liquid epoxy resin and the ketimine are used.

### INDUSTRIAL APPLICABILITY

The present invention is constituted as described above, and the coating composition for PC tendon has been realized which is hardly irritant to the skin and is able to be safely used. Further, stressing after 30 days or more from the time when concrete is casted is possible, and the composition is cured in a given time after stressing and is also superior in storage stability. Such properties are exhibited, whereby safety can be ensured at the time of work, and stressing is possible in a large concrete construction even when the exothermic temperature after concrete is casted is over 90°C by using the composition. Further, the rust prevention and corrosion prevention effect of the tendon is exhibited, and the adhesive force between the concrete and the PC tendon also becomes sufficient. Additionally, the coating composition is useful in that it doesn't cause a fall in the workability thereof, based on an increase in the viscosity after the composition is used, since the composition is also good in storage stability.

## Claims

1. A coating composition for a tendon for prestressed concrete;
wherein being applied on the surface of the tendon for prestressed concrete;
comprising oxidation-curing type resin modified with fatty acid, and metal catalyst to promote the curing of the resin; and
curing time thereof is adjusted so that tensioning by the tendon can be exerted 30 days or later after casting of the concrete.

2. The coating composition according to claim 1, further comprising filler.

3. The coating composition according to claim 1, wherein the iodine value of the fatty acid is 50 or more.

4. The coating composition according to claim 1, wherein the metal catalyst is salt of naphthenic acid and/or salt of octanoic acid.

5. The coating composition according to claim 2, wherein the iodine value of the fatty acid is 50 or more.

6. The coating composition according to claim 2, wherein the metal catalyst is salt of naphthenic acid and/or salt of octanoic acid.

7. The coating composition according to claim 3, wherein the metal catalyst is salt of naphthenic acid and/or salt of octanoic acid.

8. The coating composition according to any one of claims 1 to 7, wherein the metal catalyst is comprised in order that the mass ratio of the metal included in the metal catalyst to the oxidation-curing type resin is 0.05 to 0.5%.
